# EUROPÄISCHE PATENTSCHRIFT

(11) **EP 0 249 004 B1**
(45) Veröffentlichungstag und Bekanntmachung des Hinweises auf die Patenterteilung: **19.07.1995**
(21) Anmeldenummer: 87105374.0
(22) Anmeldetag: 10.04.1987
(51) Int. Cl.: A61N 2/00, C12N 13/00

(54) **Verfahren und Vorrichtung zur Herstellung eines Substrat mit einer energetischen Wirkladung**
Process and apparatus for the production of a substrate having an energizing active charge
Procédé et installation pour la production d'un substrat à charge électrique active

(30) Priorität: 11.04.1986 DE 3612315
(43) Veröffentlichungstag der Anmeldung: 16.12.1987
(73) Patentinhaber: Kropp, Werner, CH-6911 Campione (CH)
(72) Erfinder: Kropp, Werner, CH-6911 Campione (CH)
(74) Vertreter: Kern, Ralf M., Dipl.-Ing.

(56) Entgegenhaltungen:
- EP-A- 0 035 932
- DE-A- 2 814 286
- DE-A- 3 110 915
- DE-A- 3 244 582
- DE-A- 3 303 015
- FR-A- 850 351
- GB-A- 2 132 997

## Beschreibung

Die Erfindung betrifft ein Verfahren zur Herstellung von Substraten mit Schwingungsinformation z.B. für die biologische Anwendung sowie eine Vorrichtung zur Durchführung des Verfahrens.

Ausgabe der Erfindung ist die Herstellung eines auf verschiedenen Stoffen basierenden Substrats, welches durch Veränderungen seiner inneren Aufbaueigenschaften bzw. Transformation von bestimmten Wirkkräften auf dieses Substrat besondere energetische Eigenschaften zur vielseitigen Verwendung, beispielsweise auf dem biologischen Gebiet, aufweist, sowie ein Verfahren zur Herstellung dieses Substrats und die Schaffung einer Vorrichtung zur Durchführung dieses Verfahrens.

Es hat sich überraschenderweise herausgestellt, daß ein erfindungsgemäßes Substrat, welches eine energetische, insbesondere eine auf seine Materialstruktur übertragene Wirkladung aufweist, welche bei Flüssigkeiten bzw. transparenten Festkörpern als Substrat gegenüber einem wirkladungsfreien, gleichen Substrat spektrophotometrisch in veränderter Absorptionseigenschaft feststellbar ist, Wirkkräfte besitzt, mit denen sich gezielte Beeinflussungen anderer, damit in Verbindumg gebrachter Stoffe erreichen lassen.

Dabei tritt eine nachweisbare Wechselwirkung bzw. Kommunikation zwischen dem Substrat und den anderen Stoffen ein, die sich beispielsweise auf dem biologischen Gebiet (Landwirtschaft bzw. bei tierischen und pflanzlichen Vorgängen), aber auch generell als energetische Wechselwirkung zwischen verschiedenen Materialien einsetzen läßt, wobei die Materialien in unterschiedlichen Aggregatformen oder atomaren und molekularen Strukturformen - auch hinsichtlich kristalliner oder verbindungsstruktureller Orientierungen - vorliegen können. Dabei tritt eine entweder einseitige oder wechselseitige übertragung bzw. Kommunikation energetischer Kräfte unter nachweisbarer Veränderung der Stoffeigenschaften und der Wirkungskräfte der beteiligten Stoffe oder Materialien ein.

Die Wirkkraft-Veränderungen bzw. entsprechenden Eigenschaftsveränderungen des Substrats können dauerhaft sein und zudem in oszillierender Form dem Substrat innewohnen.

Das erfindungsgemäße Verfahren enthält alle Merkmale des Anspruchs 1.

Die Schwingungsinformation bzw. energetische Orientierungskraft kann dem Substrat unter verschiedener Ausbildung des Magnetfeldes - auch bezüglich seiner Ausrichtung zum Erd-Magnetfeld - mit je nach gewünschtem Charakter der transformierten Eigenschaften unterschiedlichen Frequenzen in einem weitgehend unbegrenzten Frequenzbereich eingeführt werden, und zwar durch Ankoppelung über elektrisch leitende oder nichtleitende Materialien, auch Halbleiter oder Halbleiter-Verstärker.

Dabei kann zunächst auch ein Zwischenträger - z.B. ein Eisenplättchen - mit der Wirkladung bzw. Information beaufschlagt werden, welches dann anschließend zur Weiterübertragung auf das eigentlich zu behandelnde Substrat verwendet wird.

Von dem erfndungsgemäß energetisch behandelten Substrat erfolgt bei seiner Verwendung dann eine Transformation auf die in ihren Eigenschaften und Entwicklungen (z.B. Wachstum bei Pflanzen) zu beeinflussenden Stoffe bzw. Materialien.

In Versuchen wurden Wirkungen mit elektromagnetischen Frequenzen von 42 663 Hz, 16180 Hz und 1655 Hz, also nicht nur bei relativ niedrigen Frequenzen erzielt.

Zur Durchführung des erfindungsgemäßen Verfahrens hat sich erfindungsgemäß eine Vorrichtung nach Anspruch 18 als geeignet erwiesen.

Dabei können Permanent- oder elektromagnetische Magnete verwendet werden. Zusätzlich kann die Vorrichtung auch zur Ausbildung einer magnetfeldmäßigen Oszillation ausgerüstet sein. Wenn die Magnetfeldpole in jeweils unterschiedlicher Orientierung zueinander angeordnet sind, sind verschiedene Substrateigenschaften erzielbar.

Ein bevorzugtes erfindungsgemäßes Verfahren sowie eine Vorrichtung zu dessen Durchführung sind -mit verschiedenen Abwandlungen- nachstehend im einzelnen beschrieben
Es zeigt:
Fig. 1 eine schematische perpektivische Darstellung einer erfindungsgemäßen Vorrichtung
Fig. 2 eine Linienschreiber-Aufzeichnung eines photometrischen Absorptionsmessgeräts ohne Zuführung von Informationsenergie über die in Fig. 1 dargestellte Sonde zu einem bestimmten Substrat sowie Spektrum-Linien bei unterschiedlich gerichtetem Magnetfeld für ein mit Informationsenergie behandeltes Substrat und
Fig. 3 eine Linienschreiber-Aufzeichnung eines photometrischen Absorptionsmessgeräts nach Behandlung eines bestimmten Substrats im Magnetfeld mittels Zuführung von Informations bzw. Wirkenergie verschiedener Frequenz durch die in Fig. 1 dargestellte Sonde.

Bei experimentellen Arbeiten mit Flüssigkeiten wurde überraschenderweise eine bestimmte Veränderung der Eigenschaft von Substraten festgestellt, nämlich, daß sich deren Absorptionseigenschaften verändern, wenn ihnen in einem auf bestimmte Weise orientierten Magnetfeld entsprechender Stärke zusätzlich noch eine energetische Information, insbesondere eine elektromagnetische, aufgeprägt wird.

Dementsprechend finden in Flüssigkeiten als Substrate unter dem Einfluß eines bestimmten Magnetfeldes und einer zusätzlichen energetischen Information gewisse Veränderungen der Struktur statt. Die Veränderungen der Absorptionseigenschaften bleiben auch nach Beseitigung des Magnetfeldes und der energetischen Informationsquelle erhalten, so daß sogar eine Speicherfähigkeit der Substrate, z.B. Flüssigkeiten, für die übertragene Wirkkraft bzw. Information gegeben ist.
Die Physikalischen und technischen Anwendungen dieses Verfahrens und der damit behandelten Substrate können vielfältig sein.

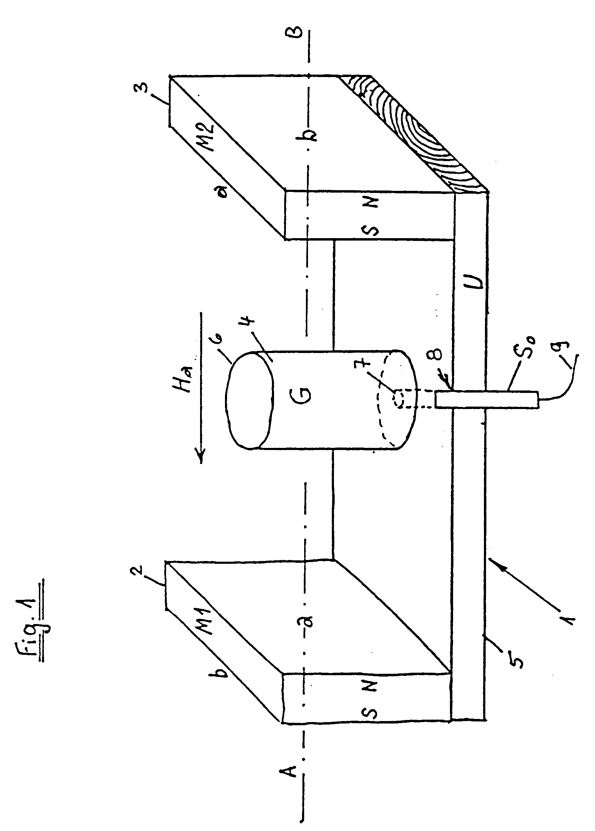

Die grundsätzliche Anordnung 1 zur erfindungsgemäßen Behandlung von Flüssigkeiten als Substrate unter Veränderung ihrer Absorptionseigenschaften im Magnetfeld ist in Fig. 1 dargestellt. Die magnetische Feldstärke Ha entsteht durch auf einer nichtmagentischen Unterlage 5 gegenpolig einander gegenüberstehende Permanentmagnete 2 und 3. Etwa in der Mitte der Anordnung 1 befindet sich ein Glasgefäß 6 mit einem zu behandelnden Substrat 4 in Form einer Flüssigkeit. Senkrecht zur Orientierung des Magnetfelds Ha wird über eine Sonde So bzw. 8 oder 7 der im Glasgefäß 6 vorhandenen Flüssigkeit die jeweils ausgewählte energetische Information zugeführt. Das Glasgefäß 6 kann dabei auch geschlossen sein.

Die magnetischen Längsachsen A, B der beiden Permanentmagnete 2 und 3 sind gleichgerichtet zueinander orientiert. Die Sonde So kann entweder neben dem Substrat 4 bzw. dessen Gefäß (Fig. 1:8) oder auch durch die nichtmagnetische Unterlage 5 an das Substrat von unten herangeführt sein (Fig. 1:7). Die Informationsenergie wird der Sonde So über die Verbindung 9 zugeführt.

Die Zuführung der Schwingungsinformation braucht aber nicht unbedingt senkrecht zum Magnetfeld Ha zu erfolgen und kann statt über eine Sonde auch über Spiegel, insbesondere Parabolspiegel oder auch Parabolantennten, erfolgen und damit in gerichteter Weise von unterschiedlichen Seiten auf das Substrat innerhalb des Magnetfeld vorgenommen werden. Auch kann die Sonde So ringhalbkreisförmig oder hufeisenartig um die Mantelfläche des Gefäßes 6, ähnlich z.B. einer Zange, herum angeordnet sein. Bei bestimmten Energieformen kann sogar auch eine hanfschnurartige Antenne zur Zuführung der energetischen Information ausreichen, die entweder in das Substrat hineinreicht oder daneben angeordnet sein kann.

Als zugeführte Schwingungsinformation kann Schall- und elektromagnetische Energie -wie auch z.B. Licht- oder Laserstrahlen- zur Anwendung kommen, welcher auch zusätzliche Schwingungen aufgepulst sein können. Andererseits kann dafür auch nicht-elektromagnetische Energie, wie beispielsweise Korpuskularstrahlung eingesetzt werden, ebenso wie jegliche aus dem Weltall empfangene Energie.

Es wurde festgestellt, daß die Wirkung der magnetischen Feldstärke auf die Veränderung der Absorptionseigenschaften des Substrats sich ändert, wenn man in der Anordnung nach Fig. 1 die Magnete 2 und 3 parallel gegeneinander vertauscht, ohne die Lage ihrer Pole zu verändern. Dabei stehen sich dann also statt der Pole a, a (gem. Fig. 1) die Pole b, b gegenüber.

Da die Magnete 2 und 3 die gleiche Form haben, aus dem gleichen Material bestehen und auch die gleiche Remanenz besitzen, entsteht bei gleichem Abstand der sich parallel einander gegenüberstehenden Polflächen zwar numerisch und hinsichtlich der Polarität die gleiche magnetische Feldstärke, jedoch ist die Wirkung auf das Absorptionsverhalten der Substrats verschieden.

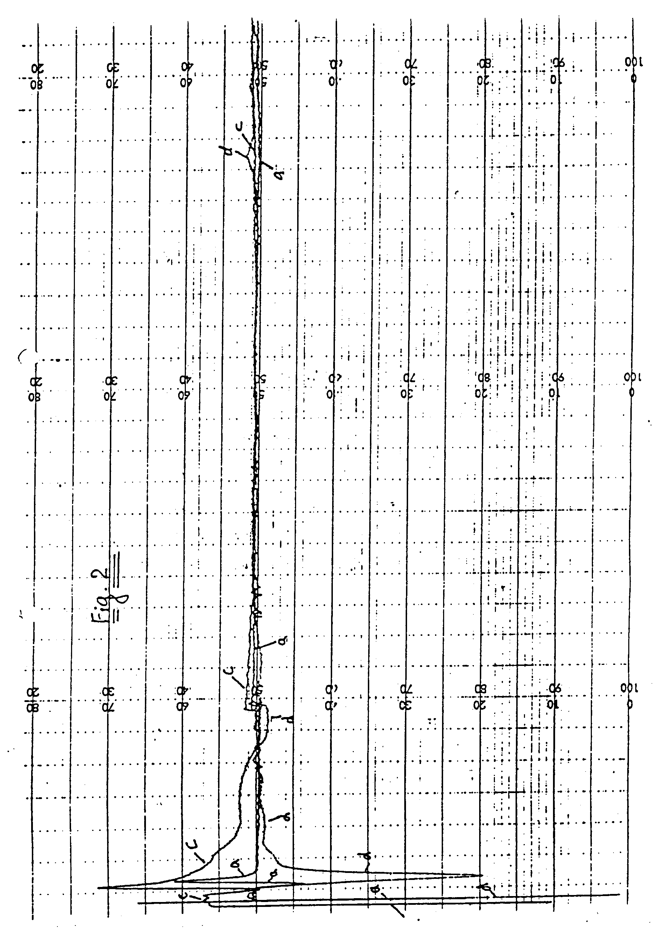

In Fig. 2 sind die Absorptionsspektren dargestellt, die mit einer 0,9%-igen Kochsalzlösung als Substrat erhalten wurden, wobei dei Kurve a als 0-Kurve das Spekturm bei der in Fig. 1 gezeigten Grundstellung der Magnete 2, 3 mit der entsprechenden magnetischen Feldstärke Ha für die vor dem Einfüllen in das Glasgefäß ursprünglich jeweils "jungfräulichen" Flüssigkeit als Substrat zeigt. Bei dieser Messung wurde dieser Kochsalzlösung über die Sonde So keinerlei energetische Information zugeführt.

Die Kurven haben folgende vergleichende Bedeutung:
Basislinie (= Kurve a), die sich ergibt, wenn sich sowohl in der hinteren als auch in der vorderen Küvette des Zweistrahlspektrophotometers Lambda 3 der Firma Perkin-Elmer jeweils die gleiche "jungfräuliche" 0,9%-ige Kochsalzlösung befindet. Als Küvetten wurden bei allen Messungen 100 mm Hellma Küvetten verwendet.

Kurve c: in der hinteren Küvette befindet sich eine "jungfräuliche" 0,9%-ige Kochsalzlösung, in der vorderen die gleiche Lösung nachdem sie in der Anordnung nach Fig. 1 im Magnetfeld der Feldstärke Ha mit einer energetischen Information über die Sonde So behandelt wurde.

Kurve d: in der hinteren Küvette befindet sich eine "jungfräuliche" 0,9%-ige Kochsalzlösung, nachdem sie in der Anordnung nach Fig. 1 im Magnetfeld mit der Feldstärke Hb, d.h. bei parallel zueinander vertauschten Magneten informiert wurde.

Bei den Messungen zu Fig. 2 betrug die Registrierungsgeschwindigkeit des Schreibers 60 nm/Min, der Ordinatenbereich 0,1 bis minus 0,1, der registrierte Wellenlängenbereich erstreckt sich von 190 nm bis 900 nm, die Skalenteilung der Abszisse beträgt 20 nm/cm mit der oberen Begrenzung bei 190 nm.

Der Unterschied der Absorptionskurven d.h. sowohl der Kurven c und d zueinander als auch im Vergleich zur 0-Kurve a ist so eklatant, daß der erzielte physikalische Effekt offensichtlich ist. Nach den bekannten physikalischen Gesetzen dürfte bei gleicher applizierter magnetischer Feldstärke eigentlich kaum ein Unterschied in den beiden Absorptionskurven auftreten. Es wird darin der Nachweis einer bestimmten physikalischen Wirkkraft von bipolarer Natur gesehen, die in der Lage ist, die Molekül- bzw. Kristallstruktur von Materie bzw. von Stoffen zu verändern und dadurch zumindest bei transparenten Festkörpern und Flüssigkeiten die Absorptionseigenschaften durch Veränderung der magnetischen Quadropole zu beeinflussen.

Diese physikalische Wirkkraft ist auch durch elektrisch nichtleitende Medien übertragbar. Es liegen Nachweise dafür vor, daß diese Kraft und die in ihr enthaltenen Organisations- bzw. Orientierungsmuster in allen biologischen Prozessen maßgebend beteiligt ist. Entsprechende Versuchsergebenisse deuten zwingend daraufhin.

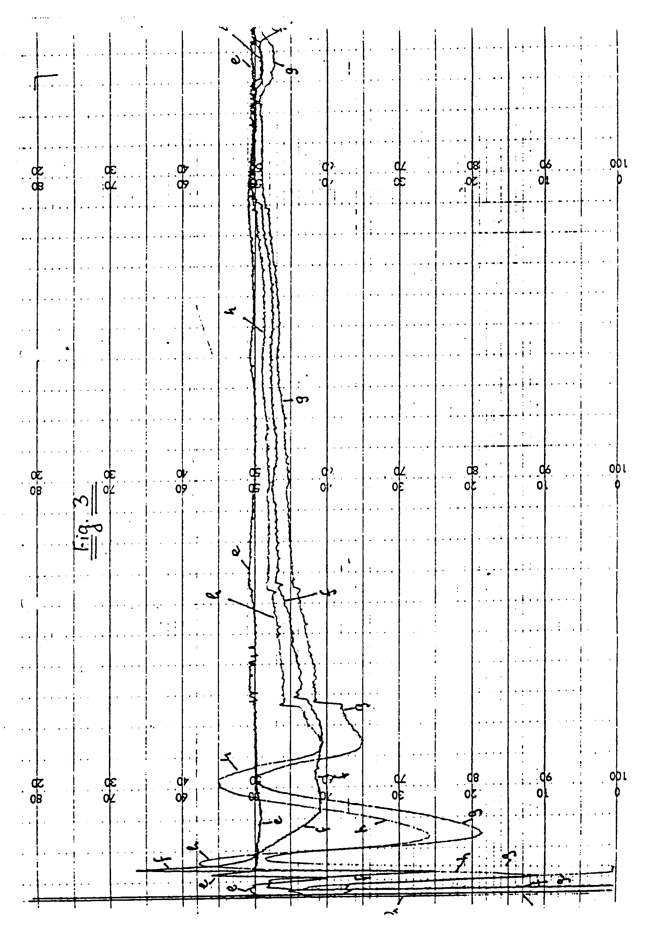

In Fig. 3 ist das Ergebnis von Untersuchungen registriert, die mit einer 0,9%-igen Kochsalzlösung erfolgten, welcher im Magnetfeld - bei Verwendung jeweils ursprünglich "jungfräulicher" Proben - beispielsweise eine elektromagnetische Information im Bereich des Hörschall- und Ultraschallbereichs zugeführt wurde.

Die Kurven haben folgende Bedeutung:
Basislinie (Kurve e), die sich ergibt, wenn sich sowohl in der hinteren als auch in der vorderen Küvette des Zweistrahlspektrophotometers Lambda 3 der Firma Perkin-Elmer jeweils die gleiche "jungfräuliche" 0,9%-ige Kochsalzlösung befindet.

Kurve f: In der hinteren Küvette befindet sich eine "jungfräuliche" 0,9%-ige Kochsalzlösung, in der vorderen die gleiche Lösung nachdem sie in der Anordnung nach Fig. 1 im Magnetfeld Ha mittels der Sonde So mit 42 663 Hz energetisch informiert wurde.

Kurve g: Hintere Küvette wie bei Kurve f, in der vorderen dieselbe ursprüngliche "jungfräuliche" Lösung nach einer energetischen Information mit 16 160 Hz.

Kurve h: Hintere Küvette wie bei Kurven e und g, in der vorderen dieselbe ursprüngliche "jungfräuliche" Lösung nach einer energetischen Information mit 1655 Hz.

Bei allen Messungen in Fig. 3 wurde mit dem Magnetfeld Ha gearbeitet;
Die Registrierungsgeschwindigkeitgkeit des Schreibers betrug 60 nm/Min, der Ordinatenbereich 0,05 bis - 0,05, der registrierte Wellenlängenbereich erstreckt sich von 190 nm bis 900 nm (oben ist immer 190 nm), die Skalenteilung der Abszisse beträgt 20 nm/cm.

Für sämtliche Versuche wurden zwei Permanentmagnete der Firma Thyssen Edelstahlwerke AG mit der Bezeichnung 77.121-108467-oo.4 aus Oxid 300 K verwendet, wobei der Abstand der sich gegenüberliegenden Stirnflächen der Permanentmagnete z.B. 25 cm. betrug.

Als weitere Verwendung der erfindungsgemäß behandelten Substrats ist die Gen-Veränderung durch übertragung von den Substraten aufgeprägten Orientierungsstrukturen möglich.

Bei der erfindungsgemäßen Behandlung des Substrats bildet das Magnetfeld Ha bzw. Hb offensichtlich eine mittlerartige Voraussetzung für die Aufnahme der energetischen Informationen durch das Substrat. Auf analoge Weise läßt sich auch auf ein bereits mit einer energetischen Information versehenes Substrat eine weitere energetische Information aufprägen, wodurch im Substrat eine aus beiden Informationen interferent oder auch resonant zusammengesetzte Wirkkraft bzw. Information entsteht. Statt einer Sonde So kann auch ein bereits mit einer Information versehenes Substrat verwendet werden.

Ein einmal mit der erfindungsgemäßen Verfahren mit einer energetischen Information oder Wirkkraft versehenes Substrat ist in der Lage, insbesondere in einem irgendwie anderen Magnetfeld -wie beispielsweise im Erdmagnetfeld- seine Information auf die in seinem Einflußbereich befindliche lebende oder tote Materie weiterzuübertragen, wobei die jeweilige Stärke des Magnetfelds einen Einfluß auf die Intensität der Übertragung haben kann.

## Patentansprüche

1. Verfahren zur Herstellung von Substraten mit bestimmter Schwingungsinformation, bei dem das Substrat zwischen zwei auf bestimmtem Abstand angeordnete Magnete, deren magnetische Längsachsen (A, B) gleichgewichtet orientiert sind, gebracht wird und ihm quer zur Verbindungsachse beider Magnete in gerichteter Weise von unterschiedlichen Seiten eine Schwingungsinformation, insbesondere eine elektromagnetische Energie, auf das Substrat innerhalb des Magnetfelds zugeführt wird, wobei z. B. die Magnetfeld-Achsen beider Magnete in Längsrichtung aufeinander ausgerichtet sind.

2. Verfahren nach Anspruch 1, bei dem die Schwingungsinformation senkrecht zur Verbindungsachse dem Substrat zugeführt wird.

3. Verfahren nach Anspruch 1 oder 2, bei dem Magnete in einer Anordnung verwendet werden, in der der Südpol des einen Magneten und der Nordpol des diesem gegenüberliegenden Magneten aneinander zugewandt sind.

4. Verfahren nach einem der Ansprüche 1 bis 3, bei dem die Magnete (Permanent- oder Elektromagnete) mindestens an ihren gegenüberliegenden Polen in flächig ausgebildeter Form verwendet werden.

5. Verfahren nach Ansprüch 1 bis 4, bei dem die Magnete mit ihrer Verbindungsachse gleichgerichtet zum Erd-Magnetfeld orientiert verwendet werden.

6. Verfahren nach einem der Ansprüche 1 bis 4, bei dem die Magnete mit ihrer Verbindungsachse horizontal senkrecht zum Erd-Magnetfeld orientiert verwendet werden.

7. Verfahren nach einem der Ansprüche 1 bis 6, bei dem das Substrat einer Behandlung mit einer Schwingungsinformation im Frequenzbereich von über 0 Hz bis zur kurzwelligen Gammastrahlung beispielsweise von 1655 Hz, 16180 Hz oder 42663 Hz unterworfen wird.

8. Verfahren nach einem der vorhergehenden Ansprüche, bei dem das Substrat mit Schwingungsinformationen aus dem Bereich biologischen Strukturen behandelt wird.

9. Verfahren nach Anspruch 8, bei dem als Substrat bioloigsches Material (z. B. Samen) verwendet wird.

10. Verfahren nach einem der Ansprüche 1 bis 9, dadurch gekennzeichnet, daß die Schwingungsinformation als Form der Raumenergie von geometrisch geformten Körpern auf das Substrat übertragen wird.

11. Verfahren nach einem der Ansprüche 1 bis 10, daudrch gekennzeichnet, daß die Schwingungsinformation von anderen, nach dem vorgenannten Verfahren vorbehandelten Substraten übertragen wird.

12. Verfahren nach einem der Ansprüche 1 bis 7, dadurch gekennzeichnet, daß die Schwingungsinformation von Energiequellen aus dem Universum bzw. von atomaren und/oder molekularen Verbindungen, auch von Pflanzen, übertragen wird.

13. Verfahren nach einem der Ansprüche 1 bis 12, dadurch gekennzeichnet, daß die Schwingungsinformation von atomaren und/oder molekularen Verbindungen auf andere atomare und/oder molekulare Verbindungen übertragen wird.

14. Verfahren nach einem der Ansprüche 1 bis 13, dadurch gekennzeichnet, daß die Schwingungsinformation auf Lebewesen bzw. zur Erreichung von Transmutationen auf atomare und/oder molekulare Verbindungen übertragen wird.

15. Verfahren nach einem der vorhergehenden Ansprüche, dadurch gekennzeichnet, daß das Substrat im Magnetfeld verbleibt, ihm fortlaufend eine bestimmte elektromagnetische Information über einen elektrischen Nichtleiter, über einen elektrischen Leiter oder eine Kombination aus beiden bzw. mittels eines Halbleiters oder eines Halbleiterverstärkers zugeführt wird und gleichzeitig durch das Photospektrometer in einem vorbestimmten Wellenlängenbereich die laufenden Absorptionsänderungen gemessen werden, und diese Werte z. B. einem Computer zur Registrierung und Speicherung zugeführt werden.

16. Verfahren nach einem der vorhergehenden Ansprüche, bei dem die Schwingungsinformation in Form von Interferenz-Schwingungsinformationen zur Beeinflussung und/oder Neutralisierung von Mikroorganismen in biologischen Systemen verwendet wird.

17. Verfahren nach einem der vorhergehenden Ansprüche, bei dem die Schwingungsinformation mittels Schallwellen zugeführt wird.

18. Vorrichtung zur Durchführung des Verfahrens nach einem der vorhergehenden Ansprüche 1 bis 17, bei der zwei auf Abstand zueinander und mit vorzugsweise ungleichnamigen einander gegenüberliegenden Polen angeordnete Magnete (2, 3) Elektro- oder insbesondere Permanentmagnete vorgesehen sind, deren magnetische Längsachsen (A, B) gleichgerichtet orientiert sind, das Substrat (4) zwischen den Magneten angeordnet ist und eine quer zur Magnetfeldachse, vorzugsweise senkrecht zur Richtung der Magnetfeldlängsachsen (A, B) und zum Strahlungseinfall auf das Substrat eine elektromagnetische Energie und/oder eine Wirkladung in Form einer Schwingungsenergie von anderen atomaren und/oder molekularen Verbindungen zuleitende Vorrichtung aufweist.

19. Vorrichtung nach Anspruch 18, dadurch gekennzeichnet, daß die Magnete (2, 3) zusätzlich ein überlagertes oszillierendes Magnetfeld aufweisen.

20. Vorrichtung nach einem der vorhergehenden Ansprüche 18 oder 19, dadurch gekennzeichnet, daß jeweils gleiche Pole (a, a bzw. b, b) einander gegenüberliegend angeordnet sind.

21. Vorrichtung nach einem der vorhergehenden Ansprüche 19 bis 20, dadurch gekennzeichnet, daß die beiden Magnete (2, 3) gegeneinander parallel austauschbar sind, d. h. ohne die Lage ihrer Pole (a, b) zu verändern.

22. Vorrichtung nach einem der vorhergehenden Ansprüche 18 bis 21, dadurch gekennzeichnet, daß die Längsachsen (A, B) der Magnetfelder der Magnete (2, 3) in der Verbindungsachse zwischen den Magneten angeordnet sind und die einander gegenüberliegenden Pole (a, b bzw. a, a oder b, b) vorzugsweise als parallel zueinander liegende Flächen ausgebildet sind.

23. Vorrichtung nach einem der vorhergehenden Ansprüche, dadurch gekennzeichnet, daß das Substrat (4) als fester Körper oder als Flüssigkeit z. B. eine 0,9%-ige Kochsalzlösung bzw. als Gas in einem Behälter (6) vorgesehen ist.

24. Vorrichtung nach einem der vorhergehenden Ansprüche 18 bis 23, gekennzeichnet durch eine Einrichtung (8) zur Zuführung Schwingungsinformation auf das Substrat (4), welche aus einem elektrisch leitenden oder einem elektrisch nicht leitenden bzw. einer Kombination aus beiden besteht.

25. Vorrichtung nach einem der vorhergehenden Ansprüche 18 bis 24, dadurch gekennzeichnet, daß als Zuführung (8) ein Halbleiter bzw. ein Halbleiter-Verstärker vorgesehen ist.

26. Vorrichtung nach einem der vorhergehenden Ansprüche 18 bis 25, dadurch gekennzeichnet, daß als Substrat ein bereits mit Schwingungsinformation versehenes Substrat zwischen den Magneten (2, 3) angeordnet ist und eine gleiche oder abweichende Schwingungsinformation an die Zuführung (8) angelegt ist.

27. Vorrichtung nach einem der Ansprüche 18 bis 26, dadurch gekennzeichnet, daß als Zuführung für die Schwingungsinformation Richtspiegel bzw. Richtsendeantennen z. B. in Parabolausführung, insbesondere auch zur Energiezuführung mittels Schall-, Licht-, elektromagnetischer aber auch Laserstrahlung vorgesehen ist.

## Claims

1. A process for production of substrates with oscillatory information, wherein the substrate is taken between two magnets disposed in defined distance whose magnetic longitudal axes (A,B) are orientated with the same weight and is supplied with an oscillatory information, especially an electromagnetic energy, transverse to the connecting axis of both magnets from different sides, the magnetic field axes of both magnets being disposed in longitudinal direction one against the other.

2. A process according to claim 1, wherein the oscillatory information is supplied to the substrate perpendicular to the connecting axis.

3. A process according to claim 1 or 2, wherein the magnets are used in an arrangement in which the south pole of the one magnet and the north pole of the magnet lying opposite to that are turned one to another.

4. A process according to one of the claims 1 to 3, wherein the magnets (permanent magnets or electomagnets) are used in planar form at least at their poles lying opposite.

5. A process according to claims 1 to 4, wherein the magnets are used straightened in the same direction with their connecting axis orientated to the terrestrial magnetic field.

6. A process according to claims 1 to 4, wherein the magnets are used with their connecting axis orientated horizontally perpendicular to the terrestrial magnetic field.

7. A process according to one of the claims 1 to 6, wherein the substrate is submitted to a treatment with an oscillatory information at one of the frequencies 1655 HZ, 18180 HZ or 42663 HZ.

8. A process according to one of the preceding claims, wherein the substrate is treated with oscillatory information from the field of biological structure.

9. A process according to claims 8, wherein biological material is used as a substrate.

10. A process according to one of the claims 1 to 9, characterized in that the oscillatory information is transmitted to the substrate by geometically formed bodies as a form of space energy.

11. A process according to one of the claims 1 to 10, characterized in that the oscillatory information is transmitted by other substrates treated by said process.

12. A process according to one of the claims 1 to 7, characterized in that the oscillatory information is transmitted by energy sources from the universe or by atomic and /or molecular compositions.

13. A process according to one of the claims 1 to 12, characterized in that the oscillatory information is transmitted by atomic and /or molecular compositions to other atomic and /or molecular compositions.

14. A process according to one of the claims 1 to 13, characterized in that the oscillatory information is transmitted to living beings or to atomic and/or molecular compostions, respectively, to reach transmutations.

15. A process according to one of the preceding claims, characterized in that the substrate remains in the magnetic field, a certain eletromagnetic information, by an electric conductor or a combination of both or by means of a semiconductor respectively or semiconductor amplifier, and, at the same time, the current absorption modifications are measured by the photospectrometer in a predetermined wavelength range, and these values are supplied to a computer for registration and storage.

16. A process according to one of the preceding claims, wherein the oscillatory information is used in the form of interference oscillatory information for influencing and / or neutralising microorganisms in biological systems.

17. A process according to one of the preceding claims, wherein the oscillatory information is supplied by means of sound waves.

18. An apparatus for realizing the process according to one of the preceding claims 1 to 17, wherein two magnets (2,3), eletromagnets or in particular permanent magnets are provided, disposed in a distance one from another and preferably with opposite poles lying opposite one to another, whose magnetic longitudinal axes (A,B) are orientated straightened in the same direction, the substrate (4) is disposed between the magnets and comprises an apparatus leading an electromagnetic energy and / or an effective charge in the form of an oscillatory energy of the other atomic and / or molecular compositions transverse to the magnetic field axis, particularly perpendicular to the direction of the magnetic field longitudinal axes (A;B) and to the incidence of radiation to the substrate.

19. An apparatus according to claim 18, characterized in that the magnets (2,3) additionally comprise a superposed oscillatory magnetic field.

20. An apparatus according to one of the preceding claims 18 or 19, characterized in that respectively equal poles (a,a or b, b respectively) are disposed lying opposite one to another,

21. An apparatus according to one of the preceding claims 19 t0 20, characterized in that the two magnets (2,3) are exchangeable parallel against one another, i.e. without changing the position of their poles. (a,b).

22. An apparatus according to one of the preceding claims 18 to 21, characterized in that the longitudinal axis (A,,B) of the magnetic fields of the magnets (2,3) are disposed in the connecting axis between the magnets and the poles lying opposite one to another (a,b or a, a respectively, or b,b) are formed preferably as planes lying parallel one to another.

23. An apparatus according to one of the preceding claims 18 to 21, characterized in that the substrate (4) is provided as a solid or as a fluid, i.e. a 0.9% common salt solution or as a gas, respectively, in a vessel (6).

24. An apparatus according to one of the preceding claims 18 to 23, characterized by means (8) for supplying of oscillatory information to the substrate (4), which is consisting of an electrically conducting or an electrically non conducting material or a combination of both, respectively.

25. An apparatus according to one of the preceding claims 18 to 24, characterized in that a semiconductor or a semiconductor amplifier, respectively, is provided as a supply (8).

26. An apparatus according to one of the preceding claims 18 to 25, characterized in that a substrate already treated with oscillatory information is disposed as a substrate between the magnets (2,3) and an equal or deviating oscillatory information is applied to the supply (8).

27. An apparatus according to one of the claims 18 to 26, characterized in that directional mirrors or directional parabolic sending antennas are provided for supplying the oscillatory inforamtion, especially also for energy supply by means of sound waves, light waves, electromagnetic but also laser radiation.

## Revendications

1. Procédé de fabrication de substrats qui possèdent une certaine information vibratoire, dans lequel on amène le substrat entre deux aimants agencés à une certaine distance et dont les axes longitudinaux magnétiques (A, S) ont la même orientation, et on fournit au substrat et transversalement à l'axe de raccordement des deux aimants une information vibratoire, en particulier une énergie électromagnétique, d'une manière dirigée depuis les côtés différents, sur le substrat à l'intérieur du champ magnétique, les axes des champs magnétiques des deux aimants étant par exemple alignés l'un vers l'autre en direction longitudinale.

2. Procédé selon la revendication 1, dans lequel l'information vibratoire est appliquée au substrat perpendiculairement à l'axe de raccordement.

3. Procédé selon l'une des revendications 1 et 2, dans lequel on utilise des aimants dans un agencement dans lequel le pôle sud de l'un des aimants et le pôle nord de l'aimant qui lui est opposé sont dirigés l'un vers l'autre.

4. Procédé selon l'une des revendications 1 à 3, dans lequel les aimants (aimants permanents ou électroaimants) sont utilisés sous une forme réalisée à plat au moins au niveau de leurs pôles en vis-à-vis.

5. Procédé selon les revendications 1 à 4, dans lequel les aimants sont utilisés orientés avec leur axe de raccordement sous la même orientation que le champ magnétique terrestre.

6. Procédé selon l'une des revendications 1 à 4, dans lequel les aimants sont utilisés avec leur axe de raccordement orienté horizontalement et perpendiculairement au champ magnétique terrestre.

7. Procédé selon l'une des revendications 1 à 6, dans lequel le substrat est soumis à un traitement avec une information vibratoire, dans la plage de fréquence de 0 Hz jusqu'à un rayonnement γ à ondes courtes, par exemple de 1655 Hz, 16180 Hz ou 42663 Hz.

8. Procédé selon l'une des revendications précédentes, dans lequel le substrat est traité avec des informations vibratoires provenant du domaine des structures biologiques.

9. Procédé selon la revendication 8, dans lequel on utilise en tant que substrat un matériau biologique (par exemple des semences).

10. Procédé selon l'une des revendications 1 à 9, caractérisé en ce que l'information vibratoire est transmise au substrat sous la forme de l'énergie spatiale de corps à formes géométriques.

11. Procédé selon l'une des revendications 1 à 10, caractérisé en ce que l'information vibratoire est transmise depuis d'autres substrats qui ont été prétraités selon le procédé précité.

12. Procédé selon l'une des revendications 1 à 7, caractérisé en ce que l'information vibratoire est transmise depuis des sources énergétiques provenant de l'univers, ou des composés atomiques et/ou moléculaires, ainsi que des plantes.

13. Procédé selon l'une des revendications 1 à 12, caractérisé en ce que l'information vibratoire provenant de composés atomiques et/ou moléculaires est transmise à d'autres composés atomiques et/ou moléculaires.

14. Procédé selon l'une quelconque des revendications 1 à 13, caractérisé en ce que l'information vibratoire est transmise à des corps vivants, ou pour atteindre des transmutations, à des composés atomiques et/ou moléculaires.

15. Procédé selon l'une des revendications précédentes, caractérisé en ce que le substrat demeure dans le champ magnétique, en ce qu'on lui applique en continu une certaine information électromagnétique au moyen d'un élément non conducteur de l'électricité, au moyen d'un conducteur électrique, ou au moyen d'une combinaison des deux, ou encore au moyen d'un semi-conducteur ou d'un amplificateur à semi-conducteur, et en ce qu'on mesure simultanément à travers un photospectromètre et dans une plage prédéterminée de longueurs d'onde les modifications d'absorption qui se déroulent, et en ce que l'on fournit ces valeurs par exemple à un ordinateur pour leur enregistrement et leur stockage.

16. Procédé selon l'une des revendications précédentes, dans lequel l'information vibratoire est utilisée sous la forme d'informations vibratoires par interférence pour influencer et/ou pour neutraliser des micro-organismes dans des systèmes biologiques.

17. Procédé selon l'une des revendications précédentes, dans lequel l'information vibratoire est admise au moyen d'ondes sonores.

18. Appareil pour mise en oeuvre du procédé selon l'une des revendications précédentes 1 à 17, dans lequel on prévoit deux aimants (2, 3), électroaimants ou en particulier aimants permanents, agencés à distance l'un de l'autre et dont les pôles en vis-à-vis sont de préférence de dénomination différente, dont les axes longitudinaux magnétiques (A, B) sont orientés vers la même direction, dans lequel le substrat (4) est agencé entre les aimants, et le dispositif comprenant un dispositif qui applique au substrat une énergie électromagnétique et/ou une charge efficace sous la forme d'une énergie vibratoire provenant d'autres liaisons atomiques et/ou moléculaires, transversalement a l'axe du champ magnétique et de préférence perpendiculairement à la direction des axes longitudinaux du champ magnétique (A, B) et à la chute du rayonnement.

19. Appareil selon la revendication 18, caractérisé en ce que les aimants (2, 3) comportent additionnellement un champ magnétique oscillant superposé.

20. Procédé selon l'une des revendications précédentes 18 ou 19, caractérisé en ce que des pôles identiques (a, a ou b, b) sont agencés mutuellement en vis-à-vis.

21. Appareil selon l'une des revendications précédentes 19 à 20, caractérisé en ce que les deux aimants (2, 3) peuvent être échangés parallèlement l'un avec l'autre, c'est-à-dire sans modifier la situation de leurs pôles (a, b).

22. Appareil selon l'une des revendications précédentes 18 à 21, caractérisé en ce que les axes longitudinaux (A, B) des champs magnétiques des éléments (2, 3) sont agencés dans l'axe de raccordement entre les éléments et en ce que les pôles en vis-à-vis (a, b ; a, a ; ou b, b) sont de préférence réalisés sous la forme de surfaces disposées parallèlement les unes aux autres.

23. Appareil selon l'une des revendications précédentes, caractérisé en ce que le substrat (4) est prévu sous la forme d'un corps solide ou d'un liquide, par exemple une solution de chlorure de sodium à 9%, ou encore en tant que gaz dans un récipient (6).

24. Appareil selon l'une des revendications précédentes 18 à 23, caractérisé en ce qu'il comprend un dispositif (8) pour admettre des informations vibratoires dans le substrat (4), qui est constitué par un matériau électriquement conducteur ou un matériau électriquement non conducteur, ou encore d'une combinaison des deux.

25. Appareil selon l'une des revendications précédentes 18 à 24, caractérisé en ce que l'on prévoit pour l'admission (8) un semi-conducteur ou un amplificateur à semi-conducteur.

26. Appareil selon l'une des revendications précédentes 18 à 25, caractérisé en ce qu'on agence en tant que substrat entre les aimants (2, 3) un substrat déjà pourvu d'informations vibratoires, et en ce qu'on applique à l'admission (8) une information vibratoire identique ou différente.

27. Appareil selon l'une des revendications précédentes 18 à 26, caractérisé en ce que l'on prévoit en tant qu'admission pour les informations vibratoires des miroirs directionnels ou des antennes émettrices directionnelles par exemple sous la forme parabolique, et en particulier également pour l'apport d'énergie au moyen de rayonnement sonore, lumineux, électromagnétique ou encore de rayonnement laser.
